# EUROPÄISCHE PATENTSCHRIFT

(11) **EP 1 649 200 B1**
(45) Veröffentlichungstag und Bekanntmachung des Hinweises auf die Patenterteilung: **08.04.2015**
(21) Anmeldenummer: 04741819.9
(22) Anmeldetag: 17.06.2004
(51) Int. Cl.: F16K 1/12

(54) **TEILEINHEIT FÜR EINE ZUSATZSTEUERVENTILEINRICHTUNG FÜR EINEN EINLASSKANAL EINER KOLBENBRENNKRAFTMASCHINE**
SUBUNIT FOR AN ADDITIONAL CONTROL VALVE DEVICE USED FOR AN INTAKE PIPE OF A RECIPROCATING INTERNAL COMBUSTION ENGINE
UNITE STRUCTURALE POUR UN ENSEMBLE SOUPAPE DE COMMANDE SUPPLEMENTAIRE D'UN CONDUIT D'ADMISSION D'UN MOTEUR A COMBUSTION INTERNE A PISTON

(30) Priorität: 31.07.2003 DE 10335136
(43) Veröffentlichungstag der Anmeldung: 26.04.2006
(73) Patentinhaber: Continental Automotive GmbH, 30165 Hannover (DE)
(72) Erfinder: COLIC, Rajko, 61350 Bad Homburg (DE); SEVERIEN, Herbert, 63589 Linsengericht (DE)
(86) Internationale Anmeldenummer: PCT/EP2004/051145
(87) Internationale Veröffentlichungsnummer: WO 2005/012773

(56) Entgegenhaltungen:
- EP-A- 0 727 600
- EP-A- 1 323 968
- US-A- 3 119 405
- US-A- 4 142 707
- US-A1- 2003 024 502

## Beschreibung

Einlasskanal einer Kolbenbrennkraftmaschine mit einer Zusatzsteuerventileinrichtung zur Impulsaufladung von Otto- und Dieselmotoren mit einer Teileinheit, die aus einem Hohlzylinder besteht, der mindestens an einer Stirnseite eine Öffnung aufweist und bei dem innen an dieser Stirnseite ein Federlager angeordnet ist, an dem eine erste Ventilfeder anliegt, in der ein Schaft, der im Federlager geführt wird, reversibel in Richtung der Längsachse des Hohlzylinders verschiebbar angeordnet ist, wobei an dem dieser Stirnseite des Hohlzylinders abgewandten Ende des Schaftes ein Gegenlager für die erste Ventilfeder angeordnet ist, das mit dem Schaft verbunden ist und bei der zwischen dem Gegenlager und innen an der gegenüberliegenden Stirnseite des Hohlzylinders eine zweite Ventilfeder angeordnet ist.

Die Erfindung bezieht sich auf einen Einlasskanal mit einer Teileinheit einer Zusatzsteuerventileinrichtung einer Kolbenbrennkraftmaschine. Zusatzsteuerventileinrichtungen für Kolbenbrennkraftmaschinen sind bekannt. Ihre Funktionsweise wird beispielsweise in der DE 101 37 828 A1/US2003/0024502 A1 beschrieben. Bei dieser Zusatzsteuerventileinrichtung ist es vorgesehen, ein Ventilglied anzuordnen, das im Wesentlichen pilzförmig ausgebildet ist und das in Richtung der Längsachse der Zusatzsteuerventileinrichtung reversibel beweglich in einer Führung geführt ist. Bei diesem Ventilglied ist an einem Schaft ein hutförmiger Teller angeordnet, der zu der vom Einlasskanal abgewandten Seite hin konkav mit einem Scheitelpunkt ausgebildet ist. Dieses Ventilglied wird im Betrieb zwischen dem Portalmagneten und dem Fangmagneten bewegt. Auf diese Weise wird die jeweils gewünschte Öffnungsstellung bzw. Schließstellung der Zusatzsteuerventileinrichtung eingestellt. Der Schaft des Ventilgliedes endet an einem Bund. Zwischen dem Bund und dem Boden des Sackloches, in dem der Schaft geführt wird, stützt sich eine erste Feder ab. Zwischen dem Bund und dem anderen Ende des Sackloches stützt sich eine weitere Feder ab. Auf diese Weise bildet das Ventilglied zusammen mit den beiden Federn ein schwingungsfähiges System, welches von den Federn in einer Mittellage gehalten wird. Die Eigenfrequenz des schwingungsfähigen Systems ist durch Federkonstanten und das Gewicht des Ventilgliedes gegeben. Auf diese Weise wird sichergestellt, dass ein außerordentlich rascher Wechsel zwischen der Offen- und der Schließstellung möglich ist, wobei von dem Portalmagnet und dem Fangmagnet, zwischen denen das Ventilglied reversibel beweglich geführt wird, jeweils nur die Haltekraft aufgebracht werden muss und die kinetische Energie in den Federn gespeichert wird. Solche Zusatzsteuerventileinrichtungen dienen zur Impulsaufladung von Otto- und Dieselmotoren. Die Impulsaufladung bewirkt dabei eine Erhöhung der Zylinderfüllung und damit eine Steigerung des Drehmoments im niedrigen und mittleren Drehzahlbereich. Bei den bekannten Zusatzsteuerventileinrichtungen ist jedoch nachteilig, dass viele Einzelteile zusammengebaut werden müssen, die sich gegenseitig kräftemäßig relativ stark beeinflussen. Der Ventilteller muss in der stromlosen Mittellage zwischen den mechanischen Anschlägen, zwischen den Portalmagneten und den Fangmagneten eine sehr eng tolerierte Mittellage einnehmen, um die Funktion des Aktuators bei möglichst niedrigem Kraftniveau bei dem Elektromagnet zu gewährleisten. Bei den üblichen Zusatzsteuerventileinrichtungen ist dies nur mit einem sehr aufwändigen manuellen Einjustieren bzw. Nachjustieren der Positionen von beispielsweise den Lagerstellen für die Ventilfedern möglich. Für die Großfertigung von Zusatzsteuerventileinrichtungen ergeben sich damit größere Probleme, die darin begründet sind, dass sich in Folge von Fertigungstoleranzen auch bei genauem ingenieurmäßigen Auslegen der einzelnen Parameter eine optimale Mittellage des Ventiltellers, bei der der Ventilteller den gleichen Abstand zum Portalmagneten wie zum Fangmagneten aufweist, nicht oder nur selten eingestellt werden kann.

Die EP 1 323 568 A1 beschreibt ein Ventil für eine Entwässerungsleitung, die US 4,142,707 ein Abschaltventil für eine Kraftstoffleitung und die EP 727 600 A1 ein Ventil für eine Leitung zur Regulierung der Durchflussmenge. Sämtliche Ventile sind nicht zur Anordnung im Einlasskanal einer Kolbenbrennkraftmaschine geeignet.

Der Erfindung liegt daher die Aufgabe zugrunde, einen Einlasskanal mit einer Zusatzsteuerventileinrichtung einer Kolbenbrennkraftmaschine zu schaffen, durch welchen sich der nachteilige Einfluss von Fertigungstoleranzen der Einzelteile weitgehend kompensieren lässt. Darüber hinaus soll die Vorrichtung auf relativ einfachem Wege eine Großfertigung von Zusatzsteuerventileinrichtungen erleichtern.

Die der Erfindung zugrunde liegende Aufgabe wird dadurch gelöst, dass die Teileinheit in einer Führung der Zusatzsteuerventileinrichtung fixiert ist.

Das Federlager ist kreisringförmig ausgebildet und gegebenenfalls mit Nuten versehen, in welche die erste Ventilfeder eingreifen kann. Bei der ersten Ventilfeder und bei der zweiten Ventilfeder handelt es sich jeweils um Druckfedern. Der Schaft ist rohrförmig in Form einer Hülse ausgebildet und ist ein Teil des Ventilgliedes der Zusatzsteuerventileinrichtung. Im zusammengebauten Zustand der Zusatzsteuerventileinrichtung ist der Schaft mit dem Ventilteller verbunden. Er wird im Federlager geführt, das heißt, der Schaft verläuft durch das Federlager und wird gleichzeitig durch das Federlager gelagert. Das Gegenlager ist ringförmig gestaltet und kann ebenfalls Nuten aufweisen, die der Aufnahme der ersten Ventilfeder oder der zweiten Ventilfeder dient. Das Gegenlager ist mit dem Schaft verbunden, wobei mittige Schraubverbindungen denkbar und vorteilhaft sind.

ersten Ventilfeder, der zweiten Ventilfeder sowie bei der Anordnung des Gegenlagers und des Federlagers anfallen, vermieden werden können, sofern man mehrere Einzelteile in einem Hohlzylinder zu einer Teileinheit zusammenfasst. Die fertige Teileinheit wird dann auf relativ einfache Weise in der Führung der Zusatzsteuerventileinrichtung eingepresst. Es ist jedoch auch möglich, die Teileinheit in der Führung der Zusatzsteuerventileinrichtung auf andere Weise zu fixieren, wobei übliche Befestigungsmittel verwendet werden können. Die Teileinheit ist aufgrund ihrer einfachen Fixierung in einer Zusatzsteuerventileinrichtung besonders vorteilhaft für den Einsatz in einer Großfertigung von Zusatzsteuerventileinrichtungen geeignet. Dabei ist gleichzeitig vorteilhaft, dass sich die Teileinheit in der Führung der Zusatzsteuerventileinrichtung auf relativ einfache Weise derart positionieren lässt, dass eine nahezu optimale Mittellage des Ventilgliedes, dass aus dem Ventilteller und dem Schaft besteht, in der stromlosen Zusatzsteuerventileinrichtung eingestellt werden kann. Wird eine definierte Maßgenauigkeit der vormontierten Teileinheit eingehalten, kann in der Endmontage durch das Einpressen der Teileinheit auf Festmaß eine enger tolerierte Mittellage des Ventilgliedes ohne zusätzlichen Mess- und Justieraufwand realisiert werden. Die Teileinheit ermöglicht ferner in vorteilhafter Weise eine Vorab-Funktionsprüfung, was sich vorteilhaft auf die Betriebssicherheit der Zusatzsteuerventileinrichtung auswirkt.

Eine bevorzugte Ausgestaltung der Erfindung besteht darin, dass das dem Gegenlager abgewandte Ende des Schaftes über die Öffnung aus dem Hohlzylinder herausragt. Dabei ist vorteilhaft, dass der Ventilteller nach Einbau der Teileinheit in die Führung der Zusatzsteuerventileinrichtung mit seinem mittleren Bund auf das dem Gegenlager abgewandte Ende aufgeschoben und vorzugsweise verschweißt werden kann. Dabei ist natürlich erforderlich, dass der Außendurchmesser des Schaftes etwas kleiner ist als der Innendurchmesser des umlaufenden Bundes des Ventiltellers. Auf diese Weise kann der Ventilteller an einer optimalen Stelle des Schaftes mit diesem verbunden werden, was sich wiederum vorteilhaft auf die Einstellung der Mittellage des Ventilgliedes zwischen dem Portalmagneten und dem Fangmagneten auswirkt.

Gemäß einer weiteren bevorzugten Ausgestaltung der Erfindung bestehen der Schaft und das Gegenlager aus einem Einzelteil. Dies vereinfacht die Herstellung der Teileinheit für die Zusatzsteuerventileinrichtung.

Eine weitere bevorzugte Ausgestaltung der Erfindung sieht vor, dass die gegenüberliegende Stirnseite des Hohlzylinders innen einen umlaufenden Bund aufweist. Dieser umlaufende Bund kann in vorteilhafter Weise durch Umbördeln hergestellt werden. Dabei ist vorteilhaft, dass die zweite Ventilfeder eine besonders gute Fixierung an seinem, dem Gegenlager abgewandten Ende erfährt.

Gemäß einer weiteren bevorzugten Ausgestaltung der Erfindung bestehen das Federlager und der Hohlzylinder aus einem Einzelteil. Dies ist dann vorteilhaft, wenn sowohl das Federlager als auch der Hohlzylinder aus einem härteren metallischen Werkstoff gefertigt werden und erleichtert dann die Fertigung der Teileinheit in vorteilhafter Weise, da ein Einzelteil eingespart werden kann.

Die Erfindung wird nachfolgend anhand der Zeichnung (Fig. 1 bis Fig. 3) näher und beispielhaft erläutert.
- Fig. 1: zeigt die Teileinheit in dreidimensionaler Form im Längsschnitt.
- Fig. 2: zeigt die Teileinheit dreidimensional im Längsschnitt aus einer anderen Perspektive.
- Fig. 3: zeigt die Anordnung der Teileinheit in der Führung einer Zusatzsteuerventileinrichtung.

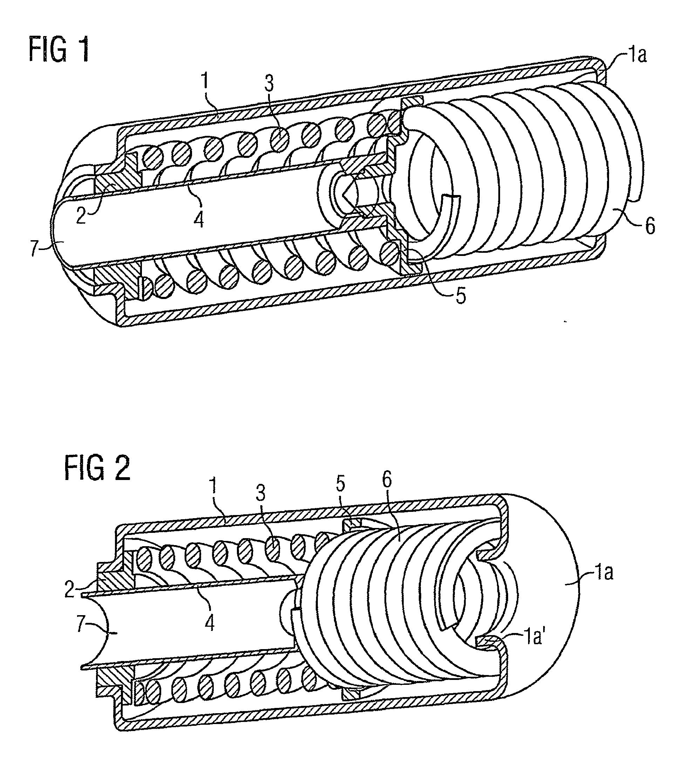

In Fig. 1 ist die Teileinheit für eine Zusatzsteuerventileinrichtung für einen Einlasskanal einer Kolbenbrennkraftmaschine dreidimensional im Längsschnitt dargestellt. Die Teileinheit besteht aus einem Hohlzylinder 1, der an einer Stirnseite eine Öffnung aufweist und bei dem innen an dieser Stirnseite ein Federlager 2 angeordnet ist, an dem eine erste Ventilfeder 3 anliegt. In der Ventilfeder 3 ist ein Schaft 4, der im Federlager 2 geführt wird, reversibel in Richtung der Längsachse des Hohlzylinders 1, verschiebbar angeordnet, wobei an dem dieser Stirnseite des Hohlzylinders 1 abgewandten Ende des Schaftes 4 ein Gegenlager 5 für die erste Ventilfeder 3 angeordnet ist. Dieses Gegenlager 5 ist mit dem Schaft 4 verbunden, wobei dies über eine mittige Schraubverbindung erfolgt. Zwischen dem Gegenlager 5 und innen an der gegenüberliegenden Stirnseite la des Hohlzylinders 1 ist eine zweite Ventilfeder 6 angeordnet. Das dem Gegenlager 5 abgewandte Ende 7 des Schaftes 4 ragt über die Öffnung aus dem Hohlzylinder 1 heraus.

In Fig. 2 ist die Teileinheit dreidimensional im Längsschnitt aus einer anderen Perspektive dargestellt. Die gegenüberliegende Stirnseite la des Hohlzylinders 1 weist innen einen umlaufenden Bund 1a' auf. Dadurch wird die Fixierung der zweiten Ventilfeder 6 auf einfache Weise verbessert.

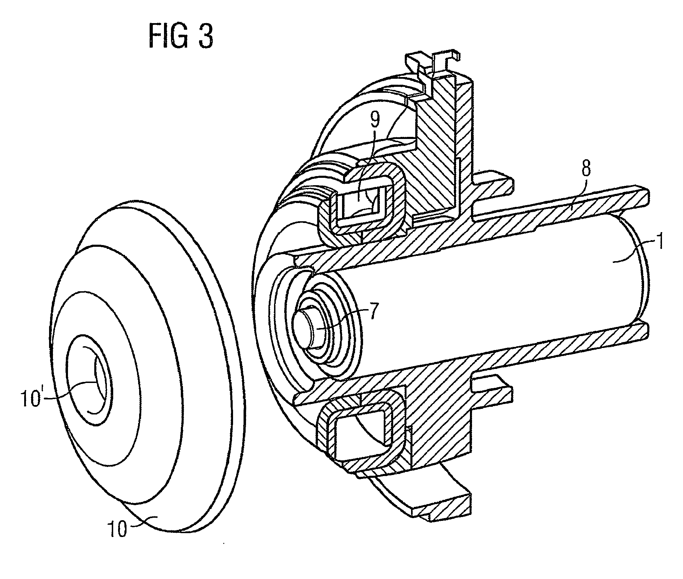

In Fig. 3 ist die Anordnung der Teileinheit für eine Zusatzsteuerventileinrichtung in der Führung 8 der Zusatzsteuerventileinrichtung dreidimensional im Längsschnitt dargestellt. Die Führung 8 wird dabei von dem Fangmagneten 9, einem Ringmagneten, umgeben. Die Teileinheit kann auf relativ einfache Weise auf Festmaß in die Führung 8 der Zusatzsteuerventileinrichtung eingepresst werden. Nachdem die Teileinheit in der Führung 8 der Zusatzsteuerventileinrichtung optimal positioniert wurde, kann der Ventilteller 10, der mittig einen umlaufenden Bund 10' aufweist, mit dem umlaufenden Bund 10' auf das dem Gegenlager 5 abgewandte Ende 7 des Schaftes aufgeschoben werden. Dies geschieht in der Weise, dass dann der Ventilteller 10 am Fangmagneten 9 anliegt. Anschließend wird der Ventilteller 10 mit dem Ende 7 des Schaftes verbunden, wobei dies in vorteilhafter Weise durch Schweißen erfolgt. Auf diese Weise sind alle Abstände und Positionen der Teile derart realisiert, so dass die Nachteile, die durch Fertigungstoleranzen üblicherweise entstehen, kompensiert werden. Dies ist besonders für eine Großfertigung vorteilhaft.

## Patentansprüche

1. Einlasskanal einer Kolbenbrennkraftmaschine mit einer Zusatzsteuerventileinrichtung zur Impulsaufladung von Otto-und Dieselmotoren mit einer Teileinheit, die aus einem Hohlzylinder (1) besteht, der mindestens an einer Stirnseite eine Öffnung aufweist und bei dem innen an dieser Stirnseite ein Federlager (2) angeordnet ist, an dem eine erste Ventilfeder (3) anliegt, in der ein Schaft (4), der im Federlager (2) geführt wird, reversibel in Richtung der Längsachse des Hohlzylinders (1) verschiebbar angeordnet ist, wobei an dem dieser Stirnseite des Hohlzylinders (1) abgewandten Ende des Schaftes (4) ein Gegenlager (5) für die erste Ventilfeder (3) angeordnet ist, das mit dem Schaft (4) verbunden ist und bei der zwischen dem Gegenlager (5) und innen an der gegenüberliegenden Stirnseite (1a) des Hohlzylinders (1) eine zweite Ventilfeder (6) angeordnet ist, **dadurch gekennzeichnet,** dass die Teileinheit in einer Führung (8) der Zusatzsteuerventileinrichtung fixiert ist.

2. Einlasskanal nach Anspruch 1, bei der das dem Gegenlager (5) abgewandte Ende (7) des Schaftes (4) über die Öffnung aus dem Hohlzylinder (1) herausragt.

3. Einlasskanal nach Anspruch 1 oder Anspruch 2, bei der der Schaft (4) und das Gegenlager (5) aus einem Einzelteil bestehen.

4. Einlasskanal nach einem der Ansprüche 1 bis 3, bei der die gegenüberliegende Stirnseite (1a) des Hohlzylinders (1) innen einen umlaufenden Bund (1a') aufweist.

5. Einlasskanal nach einem der Ansprüche 1 bis 4, bei der das Federlager (2) und der Hohlzylinder (1) aus einem Einzelteil bestehen.

6. Einlasskanal nach einem der vorhergehenden Ansprüche, bei der ein Ventilteller (1a) mit einem mittigen, umlaufenden Bund (1a') auf der Schaft aufschoben ist.

7. Einlasskanal nach Anspruch 6, bei welcher der Ventilteller mit dem Ende (7) des Schafts (4) verschweißt ist.

8. Einlasskanal nach einem der vorhergehenden Ansprüche, bei welcher die Teileinheit in die Führung (8) eingepresst ist.

## Claims

1. Intake pipe of a reciprocating internal combustion engine having an additional control valve device for pulsed charging of spark ignition and diesel engines having a component, which is composed of a hollow cylinder (1) which has an opening at at least one end side and in which a spring bearing (2) is arranged on the inside of this end side, on which spring bearing (2) a first valve spring (3) bears, a stem (4) which is guided in the spring bearing (2) being arranged so as to be reversibly displaceable in the direction of the longitudinal axis of the hollow cylinder (1) in said first valve spring (3), a counterbearing (5) for the first valve spring (3) being arranged at the end of the stem (4) facing away from this end side of the hollow cylinder (1), said counterbearing being connected to the stem (4), and in which component a second valve spring (6) is arranged between the counterbearing (5) and the inside of the opposite end side (1a) of the hollow cylinder (1), **characterized in that** the component is fixed in a guide (8) of the additional control valve device.

2. Intake pipe according to Claim 1, in which the end (7) of the stem (4) which faces away from the counterbearing (5) projects out of the hollow cylinder (1) through the opening.

3. Intake pipe according to Claim 1 or Claim 2, in which the stem (4) and the counterbearing (5) are composed of a single part.

4. Intake pipe according to one of Claims 1 to 3, in which the opposite end side (1a) of the hollow cylinder (1) has a circumferential collar (1a') on the inside.

5. Intake pipe according to one of Claims 1 to 4, in which the spring bearing (2) and the hollow cylinder (1) are composed of a single part.

6. Intake pipe according to one of the preceding claims, in which a valve plate (1a) is pushed with a central circumferential collar (1a') onto the stem.

7. Intake pipe according to Claim 6, in which the valve plate is welded to the end (7) of the stem (4).

8. Intake pipe according to one of the preceding claims in which the component is pressed into the guide (8).

## Revendications

1. Conduit d'admission d'un moteur à combustion interne à piston, ayant un dispositif à soupape de commande supplémentaire pour la suralimentation par impulsions de moteurs à allumage commandé et de moteurs diesel, comprenant une sous-unité, qui est constituée d'un cylindre (1) creux, qui a une ouverture au moins sur un côté frontal et dans lequel est monté à l'intérieur, sur ce côté frontal, un palier (2) de ressort, auquel s'applique un premier ressort (3) de soupape, dans lequel une tige (4), qui passe dans le palier (2) de ressort est montée coulissante réversiblement dans la direction de l'axe longitudinal du cylindre (1) creux, dans lequel, à l'extrémité, éloignée de ce côté frontal du cylindre (1) creux de la tige (4) est disposé un contre-palier (5) pour le premier ressort (3) de soupape, contre-palier qui est relié à la tige (4) et dans lequel un deuxième ressort (6) de soupape est disposé entre le contre-palier (5) et à l'intérieur sur le côté (1a) frontal opposé du cylindre (1) creux, **caractérisé en ce que** la sous-unité est immobilisée dans un guidage (8) du dispositif de soupape de commande supplémentaire.

2. Conduit d'admission suivant la revendication 1, dans lequel l'extrémité (7), éloignée du contre-palier (5), de la tige (4) dépasse de l'ouverture du cylindre (1) creux.

3. Conduit d'admission suivant la revendication 1 ou la revendication 2, dans lequel la tige (4) et le contre-palier (5) sont constitués en une seule pièce.

4. Conduit d'admission suivant l'une des revendications 1 à 3, dans lequel le côté (1a) frontal opposé du cylindre (1) creux a, à l'intérieur, un collet (1a') faisant le tour.

5. Conduit d'admission suivant l'une des revendications 1 à 4, dans lequel le palier (2) de ressort et le cylindre (1) creux sont constitués d'une seule pièce.

6. Conduit d'admission suivant l'une des revendications précédentes, dans lequel une tête (1a) de soupape ayant un collet (1a') au milieu et faisant le tour est poussée sur la tige.

7. Conduit d'admission suivant la revendication 6, dans lequel la tête de soupape est soudée à l'extrémité (7) de la tige (4).

8. Conduit d'admission suivant l'une des revendications précédentes, dans lequel la sous-unité est emmanchée à force dans le guidage (8).
